# EUROPÄISCHE PATENTSCHRIFT

(11) **EP 3 529 131 B1**
(45) Veröffentlichungstag und Bekanntmachung des Hinweises auf die Patenterteilung: **25.03.2020**
(21) Anmeldenummer: 18717023.8
(22) Anmeldetag: 09.04.2018
(51) Int. Cl.: B62D 21/02, B62D 21/15, B60R 11/02

(54) **ENERGIEABSORPTIONSELEMENT FÜR EINEN TRAGRAHMEN EINES KRAFTFAHRZEUGS ALS RESONANZVOLUMEN UND KRAFTFAHRZEUG**
ENERGY ABSORPTION ELEMENT FOR AN UNDERFRAME OF A MOTOR VEHICLE AS A RESONANCE VOLUME AND MOTOR VEHICLE
ÉLÉMENT D'ABSORPTION D'ÉNERGIE POUR UN CHÂSSIS D'UN VÉHICULE AUTOMOBILE EN TANT QUE VOLUME DE RÉSONANCE ET VÉHICULE AUTOMOBILE

(30) Priorität: 28.04.2017 DE 102017207199
(43) Veröffentlichungstag der Anmeldung: 28.08.2019
(73) Patentinhaber: AUDI AG, 85045 Ingolstadt (DE)
(72) Erfinder: WEISS, Simon, 85135 Titting (DE); WENZEL, Manuel, 85290 Geisenfeld (DE)
(86) Internationale Anmeldenummer: PCT/EP2018/058977
(87) Internationale Veröffentlichungsnummer: WO 2018/197190

(56) Entgegenhaltungen:
- DE-A1- 19 909 143
- DE-A1-102013 001 866
- DE-A1-102014 017 861
- DE-B3-102006 023 909

## Beschreibung

Die Erfindung betrifft ein Energieabsorptionselement für einen Tragrahmen eines Kraftfahrzeugs als Resonanzvolumen und ein damit ausgestattetes Kraftfahrzeug.

Für eine steuerbare Klangerzeugung kann ein Schallerzeuger, z.B. ein Lautsprecher, einen erzeugten Schall in ein Resonanzvolumen eines Hohlraums abgeben. Im Bassfrequenzbereich von 0-150 Hz ist dafür ein Resonanzvolumen erforderlich, welches aufgrund seiner Größe in einem Kraftfahrzeug oft nicht separat bereitgestellt werden kann. Aus diesem Grund ist es bei Kraftfahrzeugen üblich, auf bereits bestehende Hohlräume als Resonanzvolumen zurückzugreifen. Zu den Hohlräumen, welche für diesen Zweck genutzt werden, gehören auch Hohlräume innerhalb einer Tragstruktur eines Kraftfahrzeugs. In diesem Fall tritt jedoch die Problematik auf, dass sich eine sichere Aufprallcharakteristik und eine akustisch optimale Auslegung der Bauteile widersprechen können.

In der DE 10 2008 015 490 A1 wird ein Kraftfahrzeug mit einem Resonanzvolumen für einen Lautsprecher beschrieben. Dabei ist es vorgesehen, dass das Resonanzvolumen zumindest teilweise durch ein Bodenblech des Kraftfahrzeugs begrenzt wird und einen Hohlraum in einem Schweller umfasst. In dem Schweller ist ein akustisch offenes Energieabsorptionselement eingebracht, welches dazu eingerichtet ist, eine Seitenaufprallcharakteristik beizubehalten.

In der DE 197 35 082 A1 wird eine Anordnung eines Tiefton-Lautsprechers unter einem Fahrzeugsitz beschrieben. Dabei ist das Resonanzvolumen des Lautsprechers zumindest teilweise durch das von einem Tragrahmen umschlossene Schwellervolumen gebildet.

In der DE 10 2006 023 909 B3 wird eine Bandpassbox in der Tragstruktur eines Fahrzeugs beschrieben. Dabei ist es vorgesehen, dass sich an jeder Membranseite eines Lautsprechers voneinander getrennte Teilräume anschließen, welche durch das Volumen des Hohlraums wenigstens eines Elements der Tragstruktur des Fahrzeugs gebildet werden.

In der DE 199 09 143 A1 ist eine Bassbox einer Soundanlage eines Kraftfahrzeuges offenbart. Die Bassbox ist in einem hohlen Träger des Fahrzeuges ausgebildet, der sich in einem Bodenbereich des Fahrzeuges erstreckt. Der Träger kann als Seiten- oder Türschweller ausgebildet sein.

Aufgabe der vorliegenden Erfindung ist es, eine Nutzung von Hohlräumen einer Tragstruktur eines Kraftfahrzeugs zu ermöglichen und dabei deren sichere Verformungscharakteristik beizubehalten.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Durch die Erfindung wird ein Energieabsorptionselement für einen Tragrahmen eines Kraftfahrzeugs bereitgestellt. Dieser ist dadurch gekennzeichnet, dass zumindest abschnittsweise sein Querschnittsprofil als entlang einer Längsrichtung des Energieabsorptionselements konstant bleibendes Hohlprofil mit mindestens zwei geschlossenen Kammern gestaltet ist, sodass das Energieabsorptionselement mindestens zwei voneinander getrennte Kammerhohlräume umfasst. Ein solches Energieabsorptionselement wird auch Crashprofil oder Deformationsstruktur genannt. Die mindestens zwei Kammerhohlräume weisen entlang der Längsrichtung des Energieabsorptionselements eine längliche Form und an zwei Längsenden des Energieabsorptionselements Mündungen oder Kammeröffenungen auf. Jeder Kammerhohlraum ist an zwei Längsenden des Energieabsorptionselements offen und fluidisch mit einem Schallerzeuger verbunden. Mit anderen Worten handelt es sich bei dem Energieabsorptionselement um ein einziges Bauteil, welches ein konstant bleibendes Doppelkammer-Hohlprofil aufweist, wodurch zwei voneinander getrennte Kammerhohlräume gebildet sind, welche an zwei Längsenden des Energieabsorptionselements offen sind. Die Kammerholräume stellen also zumindest zwei parallel zueinander angeordnete, an ihren Enden offene Röhren dar. Durch das einteilige Hohlprofil ergibt sich der Vorteil, dass es sich um ein einziges Bauteil handelt, welches mehrere Hohlräume umfasst. Somit kann das Energieabsorptionselement als Resonanzraum für den Schallerzeuger genutzt werden, wobei mehrere Resonanzvolumina zur Verfügung stehen.

Eine Weiterbildung sieht vor, dass im Querschnittsprofil zumindest einige Kammern rechteckig gestaltet sind, wobei deren Kantenlängen jeweils 3 bis 15 mm betragen. Mit anderen Worten können zumindest einige Kammern eine rechteckige Form aufweisen, wobei diese eine Höhe und eine Breite von jeweils 3 bis 15 mm aufweisen. Der einer solchen Kammer zugehörige Kammerhohlraum kann somit eine Form eines Quaders aufweisen, welcher durch den besagten rechteckigen lichten Querschnitt einer Kammer im Querschnittsprofil und eine Länge des Energieabsorptionselements bemessen ist. Dadurch ergibt sich der Vorteil, dass ein derart gestaltetes Energieabsorptionselement eine Strukturierung oder Biegesteifigkeit umfassen kann, wodurch ein vorgebbares mechanisches Aufprallverhalten und gleichzeitig ein ausreichend großes Volumen für einen Resonanzraum bereitgestellt werden können. Insbesondere ermöglicht eine Fläche einer quadratischen Kammer von 5 × 5 mm ein vorteilhaftes mechanisches Aufprallverhalten bei vernachlässigbaren Einschränkungen bezüglich der Resonanzfrequenz.

Eine Weiterbildung sieht vor, dass zumindest einige Kammern einen geometrischen Äquivalentkreisflächendurchmesser von 4 bis 30 mm aufweisen. Mit anderen Worten können zumindest einige Kammern eine runde oder abgerundete oder vieleckige Form aufweisen, deren Fläche der eines Kreises mit einem Durchmesser von 4 bis 30 mm entspricht. Dadurch ergibt sich der Vorteil, dass Kammerhohlräume Formen aufweisen können, welche eine vorgegebene Verformungscharakteristik bei einem Aufprall aufweisen und gleichzeitig schallleitend sind.

Eine Weiterbildung sieht vor, dass die Kammerhohlräume durch Wände einer Breite von 1 bis 2 mm voneinander getrennt sind. Mit anderen Worten weisen die Wände, welche zwischen den Kammerhohlräumen angeordnet sind und diese begrenzen, eine Dicke von 1 bis 2 mm auf. Dadurch ergibt sich der Vorteil, dass in Kombination mit geeigneten Kammerabmessungen ein Energieabsorptionselement mit einem geringen Gewicht bereitgestellt werden kann.

Eine Weiterbildung sieht vor, dass an einem der Längsenden des Energieabsorptionselements eine Verbindungskammer angeordnet ist, welche einen Verbindungshohlraum bildet, in welchen die Kammerhohlräume münden und welcher die Kammerhohlräume miteinander fluidisch verbindet. Mit anderen Worten befindet sich an einem der Längsenden eine Verbindungskammer, über welche Luft und/oder Luftschall zwischen den Kammerhohlräumen wechseln kann, sodass also die Kammerhohlräume und der Verbindungshohlraum einen zusammenhängenden Hohlraum bilden. Dadurch ergibt sich der Vorteil, dass anstelle mehrerer kleiner Resonanzvolumina ein größeres Resonanzvolumen bereitgestellt ist.

Eine Weiterbildung sieht vor, dass an einem der Längsenden des Energieabsorptionselements eine Einleitungskammer ausgebildet ist, welche einen Einleitungshohlraum bildet, in den die Kammerhohlräume des Energieabsorptionselements und ein Hohlraum eines Klangerzeugers münden, wobei eine Distanz zwischen einer den Mündungen der Kammerhohlräume gegenüber angeordnete Fläche und einem Längsende des Energieabsorptionselements (also einem jeweiligen Ende der Kammerhohlräume)einen Wert aufweist, der in einem Bereich von 10 mm bis 50 mm liegt, insbesondere 20 mm beträgt. Mit anderen Worten befindet sich an einem Längsende eine Einleitungskammer, welche die Kammerhohlräume mit einem Hohlraum eines Klangerzeugers untereinander und mit dem Klangerzeuger fluidisch verbindet, wobei eine Fläche, welche gegenüber dem Längsende angeordnet ist, einen Abstand in einem Bereich von 10 mm bis 50 mm, insbesondere 20 mm, zu diesem aufweist. Die Einleitungskammer und die Verbindungskammer sind natürlich an verschiedenen oder gegenüberliegenden Enden der Kammerhohlräume angeordnet. Die Einleitungskammer kann beispielsweise ein Hohlraum eines Tragrahmens sein, in welchem oder an welchem das Energieabsorptionselement angeordnet ist. Die Weiterbildung beruht auf der Erkenntnis, dass eine verhältnismäßig flache Einleitungskammer ausreicht, um den Luftschall eines Schallerzeugers in alle Kammerhohlräume einzuspeisen. Dadurch ergibt sich der Vorteil, dass das Energieabsorptionselement nicht verkürzt werden muss, um zusätzlichen Raum für den Einleitungshohlraum bereitzustellen. Somit können Beeinträchtigungen des Verformungsverhaltens verhindert werden.

Einer Weiterbildung sieht vor, dass ein Gesamthohlraum, bestehend aus den Kammerhohlräumen, dem Einleitungshohlraum, dem Verbindungshohlraum und dem Hohlraum des Klangerzeugers, derart bemessen ist, dass er mindestens eine dominante Resonanzfrequenz zwischen 0 und 200 Hz aufweist. Mit anderen Worten weist der aus den Kammerhohlräumen, dem Einleitungshohlraum, dem Verbindungshohlraum und dem Hohlraum des Klangerzeugers bestehende Gesamthohlraum Abmessungen auf, welche zu zumindest einer dominanten Resonanzfrequenz zwischen 0 und 200 Hz führen. Dadurch ergibt sich der Vorteil, dass der Gesamthohlraum dazu eingerichtet ist, Resonanzfrequenzen im unteren Frequenzspektrum von Klangerzeugern zu erzeugen. Geeignete Abmessungen können in Versuchen ermittelt werden. Diejenigen Abmessungen, die zur Beibehaltung einer vorgegebenen Verformungscharakteristik nötig sind, können dabei unverändert beibehalten werden und die verbleibenden Abmessungen können dann zum Einstellen des Resonanzverhaltens variiert werden, bis zumindest eine dominante Resonanzfrequenz in dem besagten Frequenzintervall liegt. Eine zusätzliche oder alternative Einstellmöglichkeit bietet die folgende Weiterbildung.

Eine Weiterbildung sieht vor, dass eine einem Längsende gegenüberliegende Wand eine Öffnung aufweist, welche einen Durchmesser von 1 bis 10 mm aufweist. Insbesondere weist der Verbindungshohlraum eine Öffnung mit einem Durchmesser von 1 bis 10 mm in einer Wand auf, welche dem Längsende gegenüberliegt, also den Mündungen der Kammerhohlräume. Diese Öffnung kann eine Verschiebung einer Resonanzfrequenz bewirken. Dadurch ergibt sich der Vorteil, dass es möglich ist, eine Resonanzfrequenz mittels der Wahl eines geeigneten Durchmessers der Öffnung auf eine gewünschte Frequenz zu verschieben. Hiermit kann das Resonanzverhaltens derart eingestellt sein, dass zumindest eine dominante Resonanzfrequenz in dem besagten Frequenzintervall liegt. Ein bei einer Resonanz auftretender Einbruch des Schalldruckpegels kann somit vorteilhafterweise auf eine höhere Frequenz verschoben werden.

Eine Weiterbildung sieht vor, dass das Energieabsorptionselement ein Stranggussbauteil ist, dessen Querschnittsprofil mittels eines Extrusionsverfahrens erzeugt ist. Mit anderen Worten ist zur Anfertigung des Energieabsorptionselements ein Bauteil benutzt, welches mit dem Stranggießverfahren gefertigt ist. Das Profil wurde unter Verwendung von Extrusionsverfahren erzeugt. Ein Stranggussbauteil weist eine Steifigkeit auf, die das Einkoppeln von Körperschall aus den Kammerhohlräumen in die Wände des Energieabsorptionselement verhindert oder vermindert. Dies vermindert die Verluste. Im Gegenteil dazu lassen z.B. genietete oder geschraubte Einzelteile Schwingungsbewegungen der Einzelteile gegeneinander zu, was letztendlich zu Wärmeverlusten führt.

Die Erfindung umfasst auch ein Kraftfahrzeug mit einem Energieabsorptionselement nach einem der vorhergehenden Ansprüche.

Im Folgenden sind Ausführungsbeispiele der Erfindung beschrieben. Hierzu zeigen:
- Fig. 1: ein Längsschnittprofil eines erfindungsgemäßen Energieabsorptionselements;
- Fig. 2: zwei in einem Kraftfahrzeug angeordnete Energieabsorptionselemente;
- Fig. 3: drei mögliche Ausführungsformen des Querschnittsprofils;
- Fig. 4: eine mögliche Ausführungsform einer Einleitungskammer;
- Fig. 5: eine mögliche Ausführungsform einer Verbindungskammer mit einer Öffnung;
- Fig. 6: einen möglichen Frequenzverlauf; und
- Fig. 7: eine mögliche Änderung eines Frequenzverlaufs nach der Anbringung einer Öffnung in die Verbindungskammer.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

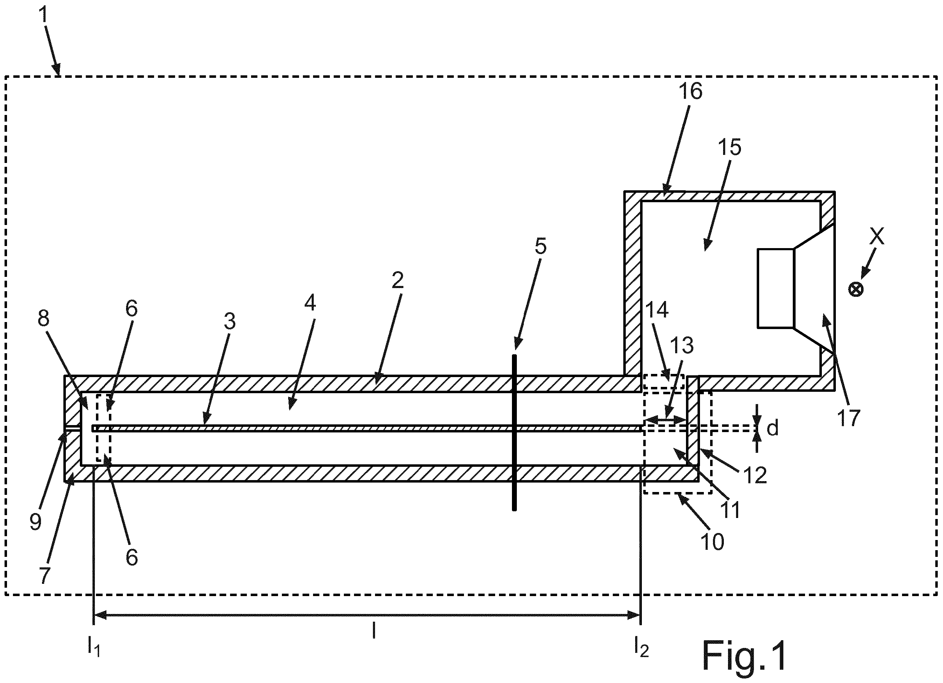

Fig. 1 zeigt ein Längsschnittprofil eines erfindungsgemäßen Energieabsorptionselements 1 mit dran enthaltenen und daran angeschlossenen Elementen. Das Energieabsorptionselement 1 umfasst einen äußeren Rahmen 2, welcher durch äußere Wände gebildet wird. Im Innenraum des Energieabsorptionselements können Trennwände 3 einer Dicke d angeordnet sein, welche Kammerhohlräume 4 voneinander abgrenzen. Der Querschnitt 5 des Energieabsorptionselements 1 bleibt über eine Länge l des Energieabsorptionselements 1 konstant. An zwei Längsenden l₁, l₂ des Energieabsorptionselements 1 weisen die Kammerhohlräume 4 Mündungen oder Kammeröffnungen 6 auf. Das Energieabsorptionselement 1 kann ein Bauteil sein, welches in einem Stranggussverfahren erzeugt wurde und anschließend mittels eines Extrusionsverfahrens bearbeitet wurde. Somit kann es aus einem einzigen Bauteil bestehen, wodurch Vibrationsgeräusche aufgrund vibrierender Teilstücke vermieden werden können. An einem Längsende l1 des Energieabsorptionselements 1 kann eine Verbindungskammer 7 angeordnet sein, welche einen Verbindungshohlraum 8 umrahmt oder abgrenzt. Die Verbindungskammer 7 kann bis auf eine Öffnung 9 nach außen geschlossen sein. Die Kammerhohlräume 4 können in den Verbindungshohlraum 8 münden, wodurch sie fluidisch miteinander verbunden sein können. An einem anderen Längsende l₂ des Energieabsorptionselements 1 kann eine Einleitungskammer 10 angeordnet sein, welche einen Einleitungshohlraum 11 umschließt oder abgrenzt. Bei dem Einleitungshohlraum 11 kann es sich um einen Hohlraum einer Tragstruktur handeln. Die Einleitungskammer 10 kann eine Wand 12 aufweisen, welche gegenüber einem Längsende l₂ des Energieabsorptionselements 1 angeordnet ist. Diese kann derart angeordnet sein, dass sie einen Abstand 13 von z.B. 20 mm zum Längsende aufweist. Dadurch kann ein Einleitungsdurchgang 14 zu einem Hohlraum 15, welcher durch eine Klangerzeugungskammer 16 eines Klangerzeugungselements 17 gebildet wird, ebenfalls eine Länge von 20 mm aufweisen. Der Hohlraum 15 der Klangerzeugungskammer 16 kann an das Klangerzeugungselement 17 angrenzen. Das Klangerzeugungselement 17 kann beispielsweise ein Lautsprecher mit einer Membran sein. Der Hohlraum des Klangerzeugungselements 15, der Einleitungshohlraum 11, die Kammerhohlräume 4 und der Verbindungshohlraum 8 können derart bemessen sein, dass der von diesen Hohlräumen gebildete Gesamthohlraum zumindest eine dominante Resonanzfrequenz f_{R} zwischen 0 und 200 Hz aufweist. Es kann sein, dass die Öffnung 9 derart bemessen ist, dass zumindest eine Resonanzfrequenz f_{R} auf eine gewünschte Frequenz f₁ verschoben wird. Für die Beschreibung eines möglichen Verlaufes des Schalldruckpegels Spl gegen eine Anregungsfrequenz f ist ein Erfassungsort X der in den folgenden Figuren dargestellten Pegelverläufe gekennzeichnet.

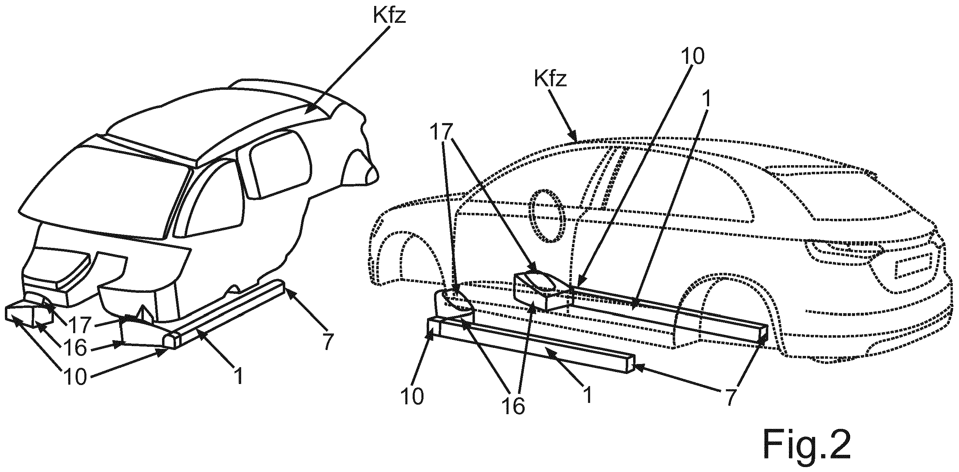

Fig. 2 zeigt zwei in einem Kraftfahrzeug Kfz angeordnete Energieabsorptionselemente 1 mit angeschlossenen Elementen aus zwei verschiedenen Blickwinkeln. Dabei können die Energieabsorptionselemente 1 in einem Hohlraum eines Seitenschwellers des Kraftfahrzeugs Kfz angeordnet sein. An jedem Energieabsorptionselement 1 kann an einem Längsende l₂ eine Einleitungskammer 10 angeordnet sein, über welche eine fluidische Verbindung zu einer Klangerzeugungskammer 16 eines Klangerzeugungselements 17 hergestellt werden kann. An einem Längsende l₁ kann eine Verbindungskammer 7 angeordnet sein.

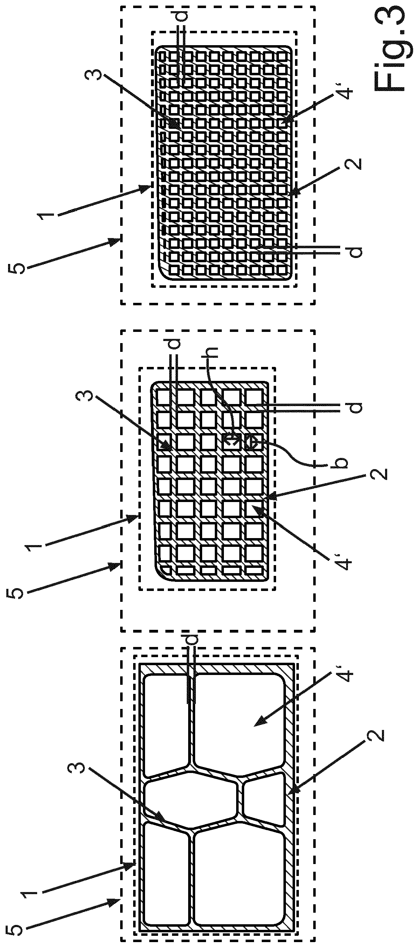

Fig. 3 zeigt drei mögliche Querschnitte 5 eines Energieabsorptionselements 1, welche in einer Ebene liegen, die normal zur Längsrichtung l des Energieabsorptionselements 1 ausgerichtet ist. Der Querschnitt des Energieabsorptionselements 5 kann durch einen äußeren Rahmen 2 begrenzt sein. Innerhalb des Energieabsorptionselements 1 können Trennwände 3 einer Dicke d ein Profil bilden, welches mehrere voneinander getrennte Kammern 4' umfasst, welche zu den jeweiligen Kammerhohlräumen 4 gehören. Die Dicke der Trennwände kann 1 bis 2 mm betragen. Zumindest einige Kammerhohlräume 4 können im Querschnitt Kammern 4' aufweisen, welche eine vieleckige, eine rechteckige oder eine runde Form haben. Zumindest einige Kammern 4' können eine rechteckige Form aufweisen, wobei eine Breite b und eine Höhe h jeweils zwischen 3-15 mm liegen können. Zumindest einige Kammern 4' können eine Fläche haben, welche der einer Kreisfläche mit einem Äquivalentkreisflächendurchmesser von 4-30 mm entspricht. Die Gestaltung der Kammerhohlräume kann derart sein, dass zumindest einige Kammern eine Größe von 10 × 10 mm aufweisen und somit ein Hohlraum eines Volumens von 4,7 l gebildet werden kann. Die Kammern können auch derart ausgebildet sein, dass diese Abmessungen von 5 × 5 mm aufweisen und somit ein verfügbares Volumen von 4,6 l bereitstellen.

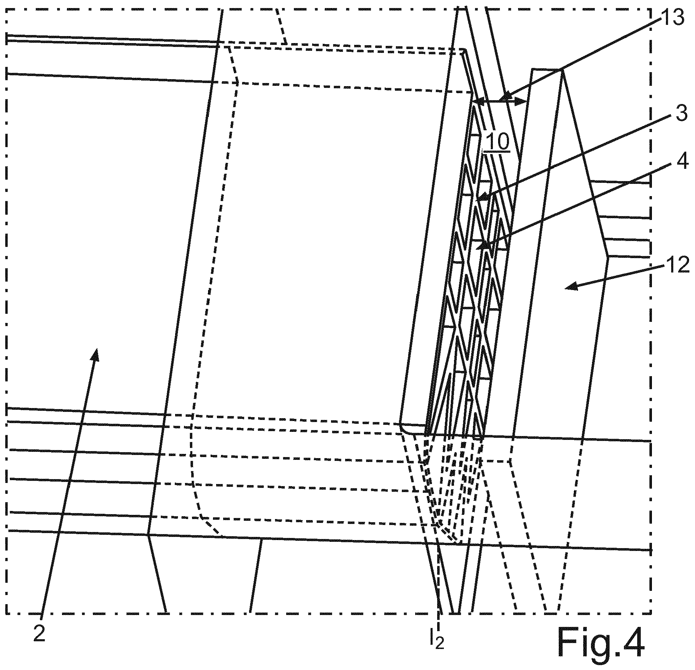

Fig. 4 zeigt eine mögliche Ausführungsform einer Einleitungskammer 10. Die Einleitungskammer 10 kann eine Wand 12 umfassen, welche in einem Abstand 13 von z.B. 20 mm zu einem Längsende l₂ des Energieabsorptionselements 1 angeordnet sein kann. Die Fig.4 zeigt auch den äußeren Rahmen 2 des Energieabsorptionselements 1 und Trennwände 3, welche Kammerhohlräume 4 voneinander abtrennen.

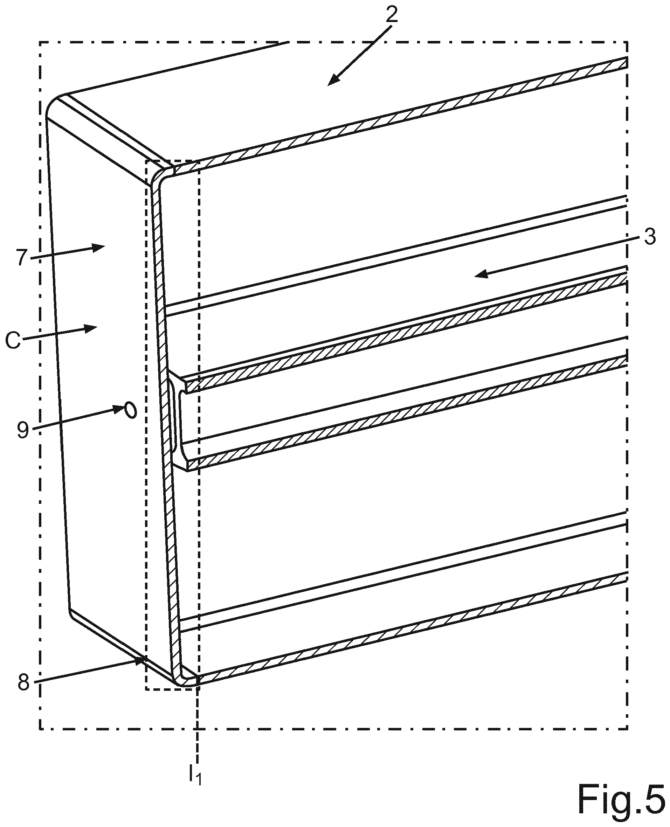

Fig. 5 zeigt eine mögliche Ausführungsform einer Verbindungskammer 7, welche einen Verbindungshohlraum 8 umschließt. In der Verbindungskammer 7 kann in einer Wand eine Öffnung 9 eingearbeitet sein. Die Verbindungskammer 7 kann sich an einem Längsende l₁ des Energieabsorptionselements 1 befinden und direkt mit dem äußeren Rahmen 2 des Energieabsorptionselements 1 verbunden sein. Die Öffnung kann eine Fläche aufweisen, welche zu einer Verschiebung der Resonanzfrequenz f_{R} des Gesamthohlkörpers führen kann.

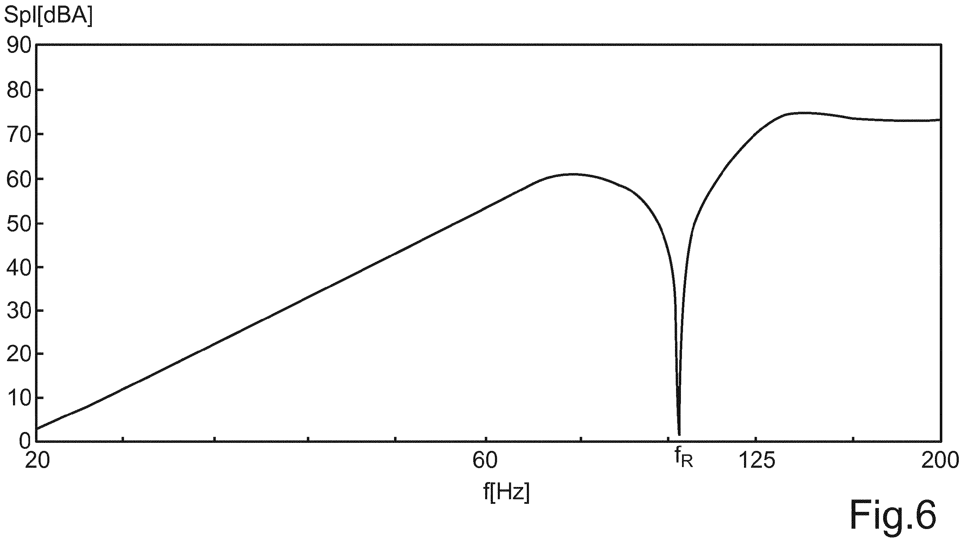

Fig. 6 zeigt einen möglichen Frequenzgang eines Systems, bestehend aus einer Verbindungskammer 7, einer Einleitungskammer 10, einem Energieabsorptionselement 1 und einer Klangerzeugungskammer 16, welches von einem Klangerzeugungselement 17 angeregt wird. In dem Diagramm ist der Schalldruckpegel Spl gegen die Anregungsfrequenz f des Systems aufgetragen. Im Bereich einer Resonanzfrequenz f_{R} des Systems fällt der Schalldruckpegel auf ein Minimum. Ein Verlauf kann an dem Erfassungsort X auftreten.

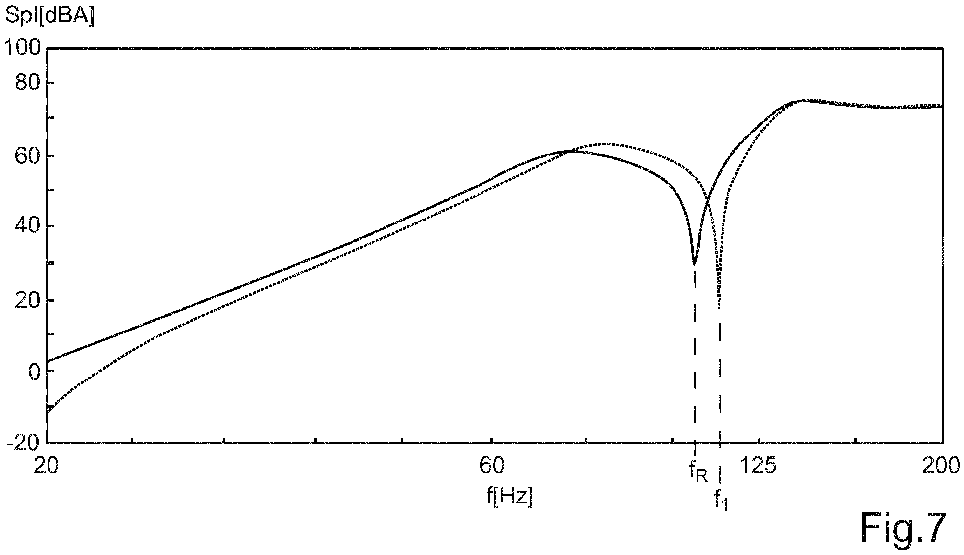

Fig. 7 zeigt einen Vergleich möglicher Frequenzgänge eines Systems, bestehend aus einer Verbindungskammer 7, einer Einleitungskammer 10, einem Energieabsorptionselement 1 und einer Klangerzeugungskammer 16, welches von einem Klangerzeugungselement 17 angeregt wird. Dabei umfasst die Verbindungskammer 7 eines der Systeme eine Öffnung 9. In dem Diagramm ist der Schalldruckpegel Spl gegen die Anregungsfrequenz f des Systems aufgetragen. Die Öffnung 9 bewirkt eine Änderung einer Resonanzfrequenz f_{R} des Systems, wodurch sich die Resonanzfrequenz f_{R} zu einer angestrebten Resonanzfrequenz f₁ verschiebt. Ein Verlauf kann an dem Erfassungsort X auftreten.

Insgesamt zeigen die Beispiele, wie durch die Erfindung die Nutzung von Crashprofilen mit einer Vielzahl von Hohlräumen als Resonanzkörper für Lautsprecher ermöglicht ist.

## Patentansprüche

1. Energieabsorptionselement (1) für einen Tragrahmen eines Kraftfahrzeugs (Kfz),
**dadurch gekennzeichnet, dass**
a. ein Querschnittsprofil (5) entlang einer Längsrichtung (I) des Energieabsorptionselements als konstant bleibendes Hohlprofil mit mindestens zwei geschlossenen Kammern (4') gestaltet ist, sodass das Energieabsorptionselement (1) mindestens zwei voneinander getrennte Kammerhohlräume (4) umfasst,
b. die mindestens zwei Kammerhohlräume (4) entlang der Längsrichtung (I) des Energieabsorptionselements (1) eine längliche Form und an zwei Längsenden (l₁, l₂) des Energieabsorptionselements (1) Mündungen oder Kammeröffnungen (6) aufweisen, und jeder Kammerhohlraum (4) an den zwei Längsenden (l₁,l₂) des Energieabsorptionselements (1) offen ist, und
c. jeder Kammerhohlraum (4) fluidisch mit einem Schallerzeuger (17) verbunden ist.

2. Energieabsorptionselement (1) nach Anspruch 1,
**dadurch gekennzeichnet, dass**
im Querschnittsprofil (5) zumindest einige Kammern (4') rechteckig gestaltet sind, wobei deren Kantenlängen (b, h) jeweils 3-15 mm betragen.

3. Energieabsorptionselement (1) nach einem der vorhergehenden Ansprüche,
**dadurch gekennzeichnet, dass**
zumindest einige Kammern (4') einen geometrischen Äquivalentkreisflächendurchmesser von 4-30 mm aufweisen.

4. Energieabsorptionselement (1) nach einem der vorhergehenden Ansprüche,
**dadurch gekennzeichnet, dass**
die Kammerhohlräume (4) durch Trennwände (3) der Kammern (4') einer Breite (d) von 1-2 mm voneinander getrennt sind.

5. Energieabsorptionselement (1) nach einem der vorhergehenden Ansprüche,
**dadurch gekennzeichnet, dass**
an einem der Längsenden (l₁) des Energieabsorptionselements (1) eine Verbindungskammer (7) angeordnet ist, welche einen Verbindungshohlraum (8) bildet, in welchen die Kammerhohlräume (4) münden und welcher die Kammerholräume (4) miteinander fluidisch verbindet.

6. Energieabsorptionselement (1) nach einem der vorhergehenden Ansprüche,
**dadurch gekennzeichnet, dass**
an einem der Längsenden (l₂) des Energieabsorptionselements (1) eine Einleitungskammer (10) ausgebildet ist, welche einen Einleitungshohlraum (11) bildet, in den die Kammerhohlräume (4) des Energieabsorptionselements (1) und ein Hohlraum (15) einer Klangerzeugungskammer (16) münden, wobei eine Distanz (13) zwischen einer Fläche (12) und einem Längsende (l₂) des Energieabsorptionselements (1) 20-40 mm beträgt.

7. Energieabsorptionselement (1) nach Anspruch 5 und 6,
**dadurch gekennzeichnet, dass**
ein Gesamthohlraum, bestehend aus den Kammerhohlräumen (4), dem Einleitungsholraum (11), dem Verbindungshohlraum (8) und dem Hohlraum des Klangerzeugers (15), derart bemessen ist, dass er mindestens eine dominante Resonanzfrequenz (f_{R}) zwischen 0 und 200 Hz aufweist.

8. Energieabsorptionselement (1) nach einem der Ansprüche 5-7,
**dadurch gekennzeichnet, dass**
eine einem Längsende (l₁) gegenüberliegende Wand eine Öffnung (9) aufweist, welche einen Durchmesser von 1 bis 10 mm aufweist.

9. Energieabsorptionselement (1) nach einem der vorhergehenden Ansprüche,
**dadurch gekennzeichnet, dass**
das Energieabsorptionselement (1) ein Stranggussbauteil ist, dessen Querschnittsprofil (5) mittels eines Extrusionsverfahrens erzeugt wurde.

10. Kraftfahrzeug (Kfz) mit einem Energieabsorptionselement (1) nach einem der vorhergehenden Ansprüche.

## Claims

1. Energy absorption element (1) for an underframe of a motor vehicle (Kfz),
**characterised in that**
a) a cross-section profile (5) along a longitudinal direction (I) of the energy absorption element is designed as a constant remaining hollow profile having at least two closed chambers (4'), such that the energy absorption element (1) includes at least two chamber cavities (4) separated from one another,
b) the at least two chamber cavities (4) along the longitudinal direction (I) of the energy absorption element (1) have an elongated form and at two longitudinal ends (l₁, l₂) of the energy absorption element (1) have openings or chamber openings (6), and each chamber cavity (4) is open at the two longitudinal ends (l₁, l₂) of the energy absorption element (1), and
c) each chamber cavity (4) is fluidically connected with a sound generator (17).

2. Energy absorption element (1) according to claim 1,
**characterised in that**
in the cross-section profile (5) at least some chambers (4') are rectangularly designed, wherein their side lengths (b, h) are respectively 3-15 mm.

3. Energy absorption element (1) according to any of the preceding claims,
**characterised in that**
at least some chambers (4') have a geometrical equivalent circular area diameter of 4-30 mm.

4. Energy absorption element (1) according to any of the preceding claims,
**characterised in that**
the chamber cavities (4) are separated from one another by partition walls (3) of the chambers (4') of a breadth (d) of 1-2 mm.

5. Energy absorption element (1) according to any of the preceding claims,
**characterised in that**
at one of the longitudinal ends (l₁) of the energy absorption element (1) is disposed a connecting chamber (7) which forms a connecting cavity (8) into which the chamber cavities (4) open and which connects fluidically the chamber cavities (4) with one another.

6. Energy absorption element (1) according to any of the preceding claims,
**characterised in that**
at one of the longitudinal ends (l₂) of the energy absorption element (1) is formed an introduction chamber (10) which forms an introduction cavity (11) into which the chamber cavities (4) of the energy absorption element (1) and a cavity (15) of a sound generation chamber (16) open, wherein a distance (13) between a surface (12) and a longitudinal end (l₂) of the energy absorption element (1) is 20-40 mm.

7. Energy absorption element (1) according to claims 5 and 6,
**characterised in that**
a total cavity, consisting of the chamber cavities (4), the introduction cavity (11), the connecting cavity (8) and the cavity of the sound generator (15) is dimensioned such that it has at least a dominant resonance frequency (f_{R}) between 0 and 200 Hz.

8. Energy absorption element (1) according to any of claims 5-7,
**characterised in that**
a wall situated opposite a longitudinal end (l₁) has an opening (9) which has a diameter of 1 to 10 mm.

9. Energy absorption element (1) according to any of the preceding claims,
**characterised in that**
the energy absorption element (1) is a continuous casting component, the cross-section profile (5) of which was generated by means of an extrusion method.

10. Motor vehicle (Kfz) having an energy absorption element (1) according to any of the preceding claims.

## Revendications

1. Élément d'absorption d'énergie (1) pour un châssis d'un véhicule automobile (Kfz),
**caractérisé en ce que**
a. un profilé de coupe transversale (5) est conçu le long d'une direction longitudinale (I) de l'élément d'absorption d'énergie en tant que profilé creux restant constant avec au moins deux chambres fermées (4'), de sorte que l'élément d'absorption d'énergie (1) comprend au moins deux cavités de chambre (4) séparées l'une de l'autre,
b. les au moins deux cavités de chambre (4) présentent le long de la direction longitudinale (I) de l'élément d'absorption d'énergie (1) une forme allongée et au niveau de deux extrémités longitudinales (l₁, l₂) de l'élément d'absorption d'énergie (1) des embouchures ou ouvertures de chambre (6), et chaque cavité de chambre (4) est ouverte au niveau des deux extrémités longitudinales (l₁, l₂) de l'élément d'absorption d'énergie (1), et
c. chaque cavité de chambre (4) est reliée fluidiquement à un générateur de son (17).

2. Élément d'absorption d'énergie (1) selon la revendication 1,
**caractérisé en ce que**
au moins quelques chambres (4') sont conçues de manière rectangulaire dans le profilé de coupe transversale (5), dans lequel leurs longueurs d'arête (b, h) sont respectivement de 3-15 mm.

3. Élément d'absorption d'énergie (1) selon l'une quelconque des revendications précédentes,
**caractérisé en ce que**
au moins quelques chambres (4') présentent un diamètre de surface circulaire équivalente géométrique de 4-30 mm.

4. Élément d'absorption d'énergie (1) selon l'une quelconque des revendications précédentes,
**caractérisé en ce que**
les cavités de chambre (4) sont séparées l'une de l'autre par des cloisons de séparation (3) des chambres (4') d'une largeur (d) de 1-2 mm.

5. Élément d'absorption d'énergie (1) selon l'une quelconque des revendications précédentes,
**caractérisé en ce que**
au niveau d'une des extrémités longitudinales (l₁) de l'élément d'absorption d'énergie (1), une chambre de liaison (7) est agencée, laquelle forme une cavité de liaison (8), dans laquelle les cavités de chambre (4) débouchent et laquelle relie fluidiquement l'une à l'autre les cavités de chambre (4).

6. Élément d'absorption d'énergie (1) selon l'une quelconque des revendications précédentes,
**caractérisé en ce que**
au niveau d'une des extrémités longitudinales (l₂) de l'élément d'absorption d'énergie (1), une chambre d'introduction (10) est réalisée, laquelle forme une cavité d'introduction (11), dans laquelle les cavités de chambre (4) de l'élément d'absorption d'énergie (1) et une cavité (15) d'une chambre de génération de son (16) débouchent, dans lequel une distance (13) entre une surface (12) et une extrémité longitudinale (l₂) de l'élément d'absorption d'énergie (1) est de 20-40 mm.

7. Élément d'absorption d'énergie (1) selon la revendication 5 et 6,
**caractérisé en ce que**
une cavité d'ensemble, composée des cavités de chambre (4), de la cavité d'introduction (11), de la cavité de liaison (8) et de la cavité du générateur de son (15), est dimensionnée de sorte qu'elle présente au moins une fréquence de résonnance dominante (f_{R}) entre 0 et 200 Hz.

8. Élément d'absorption d'énergie (1) selon l'une quelconque des revendications 5-7,
**caractérisé en ce que**
une paroi opposée à une extrémité longitudinale (l₁) présente une ouverture (9), laquelle présente un diamètre de 1 à 10 mm.

9. Élément d'absorption d'énergie (1) selon l'une quelconque des revendications précédentes,
**caractérisé en ce que**
l'élément d'absorption d'énergie (1) est un composant de coulée continue, dont le profilé de coupe transversale (5) a été généré au moyen d'un procédé d'extrusion.

10. Véhicule automobile (Kfz) avec un élément d'absorption d'énergie (1) selon l'une quelconque des revendications précédentes.
